# EUROPÄISCHE PATENTANMELDUNG

(11) **EP 3 279 903 A1**
(43) Veröffentlichungstag der Anmeldung: **07.02.2018**
(21) Anmeldenummer: 16182603.7
(22) Anmeldetag: 03.08.2016
(51) Int. Cl.: H01B 13/012, H02G 3/00

(54) **DETEKTIONSEINRICHTUNG FÜR EIN KABELSTRANG- VERLEGESYSTEM**

(71) Anmelder: TSK Prüfsysteme GmbH, 32457 Porta Westfalica (DE)
(72) Erfinder: Kocatepe, Hakan, Çorlu - Tekirdag (TR); Apak, Çagatay, Çorlu - Tekirdag (TR)
(74) Vertreter: Bremer, Ulrich

(57) **Zusammenfassung**

Die Erfindung betrifft eine Detektionseinrichtung für ein Verlegesystem zum Verlegen eines Kabelstranges und ein derartiges Verlegesystem, sowie ein Herstellungsverfahren für den Kabelstrang.

Die Detektionseinrichtung (8, 10) für ein Verlegesystem (30) zur Ausbildung eines Kabelstrangs (2), wobei die Detektionseinrichtung aufweist: eine mobile Einheit (10) mit einer Befestigungseinrichtung (7) zur Anbringung an einem Benutzer (9) und einem kapazitiven Koppler (12) zur Einkopplung von Erkennungs-Frequenzsignalen (S1) in den Körper des Benutzers (9),
eine Steuer- und Auswerteeinrichtung (8) zur Ausgabe von Anzeigesignalen (S3) an eine Anzeigeeinrichtung (6),
wobei die Steuer- und Auswerteeinrichtung (8) zur Datenkommunikation mit der mobilen Einheit (10) über Stecker-Halterungen (22) und an die Stecker-Halterungen (22) angeschlossenes Kabel (3) ausgebildet ist, wobei die Steuer- und Auswerteeinrichtung (8) ausgelegt ist,
bei Aufnahme eines Erkennungs-Frequenzsignals (S1) der mobilen Einheit (10) über eine Stecker-Halterung (22) nachfolgend Anzeigesignale (S3) an die Anzeigeeinrichtung (6) zur Anzeige eines Verlegepfades (26) für das angeschlossene Kabel (3) und/oder Leitungen (4) der Kabel auszugeben.

## Beschreibung

Die Erfindung betrifft eine Detektionseinrichtung für ein Kabelstrang-Verlegesystem, ein derartiges Verlegesystem sowie ein Verfahren zum Herstellen eines Kabelstrangs.

Kabelstränge, z. B. Kabelbäume, werden insbesondere in Fahrzeuge, z. B. Kraftfahrzeugen, eingesetzt und weisen eine Vielzahl verschiedener Kabel mit angeschlossenen Steckern auf. Um einen Einbau der Kabelstränge zu ermöglichen, bei dem die Stecker an geeigneten Positionen für die Stecker-Halterungen angeordnet sind und die Kabel geordnet und übersichtlich geführt sind, sind die Kabel im Allgemeinen entlang geeigneter Verlegepfaden verlegt und fixiert, z. B. über Kabelschellen und Kabelhalter.

Hierzu sind Kabelstrang-Verlegetische bzw. Verlegetische bekannt, an denen die Kabelstränge von einem Benutzer sukzessive ausgebildet werden. Hierzu werden z. B. teilweise vorkonfektionierte Kabel verwendet, an denen z. B. jeweils an einem ersten Ende ein Stecker angebracht ist. Ein derartiges Kabel kann im Allgemeinen ein oder mehrere elektrische Leitungen, d. h. mit Litze oder Kunststoffhüllen versehene Drähte, aufweisen, je nach Anzahl der Pole der Stecker. Der Benutzer ergreift ein derartiges Kabel, wobei er den bereits vorkonfektionierten Stecker in eine Stecker-Halterung stecken kann, das Kabel oder auch einzelne Leitungen des Kabels in geeigneter Weise entlang eines Verlegepfades verlegt und fixiert und nachfolgend - bei nichtvorkonfektionierten Leitungen - gegebenenfalls das Kabel geeignet kürzt und hierbei das zweite Ende ausbildet und den zweiten Stecker an das zweite Ende crimpt bzw. montiert. Eine ordnungsgemäße und sichere Verlegung ist für eine nachfolgende sichere Funktionalität des Kabelbaums wichtig, wobei zum Teil eine sehr hohe Anzahl verschiedener Kabel entlang definierter Wege bzw. Verlegungs-Pfade zu verlegen sind, um eine sichere und kompakte Ausbildung zum Verlegen z. B. in einem Fahrzeug zu ermöglichen.

Es ist grundsätzlich bekannt, Verlegepfade auf Anzeigeeinrichtungen anzuzeigen. Die Identität der Leitung wird z. B. durch Eingabe einer Nummer, oder auch Einlesen eines auf den Leitungen aufgebrachten Bar-Codes ermittelt, woraufhin dem Benutzer ggf. von einer Steuereinrichtung des Verlegetisches über eine Anzeigeeinrichtung ein Verlegepfad mitgeteilt wird.

Die Verwendung einer geeigneten Anzeigeeinrichtung kann bereits die Dauer und den Aufwand der Verlegung verringern; dennoch ist die Verlegung von Kabeln zur Herstellung eines Kabelstrangs im Allgemeinen aufwändig.

Der Erfindung liegt die Aufgabe zugrunde, eine Detektionseinrichtung für ein Kabelstrang- Verlegesystem, ein Verlegesystem sowie ein Verfahren zum Herstellen eines Kabelstrangs zu schaffen, die eine sichere und effektive Ausbildung der Kabelstränge ermöglichen.

Diese Aufgabe wird durch eine Detektionseinrichtung für ein Kabelstrang- Verlegesystem, ein Verlegesystem mit der Detektionseinrichtung sowie das Verfahren nach den unabhängigen Ansprüchen gelöst. Die Unteransprüche beschreiben bevorzugte Weiterbildungen.

Das erfindungsgemäße Verfahren ist insbesondere zur Verwendung der erfindungsgemäßen Detektionseinrichtung und des erfindungsgemäßen Verlegesystems vorgesehen; das Kabelstrang-Verlegesystem ist insbesondere zur Durchführung eines erfindungsgemäßen Verfahrens vorgesehen.

Das erfindungsgemäße Verlegesystem weist insbesondere die erfindungsgemäße Detektionseinrichtung sowie den Verlegetisch mitsamt Anzeigeeinrichtung und Steckeraufnahmen auf.

Hierbei kann der Verlegetisch auch als Prüftisch für eine nachfolgende Prüfung des Kabelstranges dienen.

Somit ist eine Einheit vorgesehen, die eine kapazitive Einkopplung von Signalen über den Körper bzw. die Haut des Benutzers ermöglicht. Hierzu weist die Einheit einen kapazitiven Koppler, insbesondere ein Coupling Pad, auf, das Erkennungs-Frequenzsignale einer geeigneten Frequenz kapazitiv in die Haut des Benutzers einkoppelt. Wenn somit der Benutzer mit seiner Hand, d.h. seinen Fingern, eine Leitung eines Kabels ergreift, können die elektrischen kapazitiven Erkennungs-Frequenzsignale ohne eine gesundheitliche Gefährdung des Benutzers über die Haut und die Hand des Benutzers in die Leitung kapazitiv eingekoppelt werden, wobei kein galvanischer Kontakt zwischen dem metallischen Draht der Leitung und der Hand erforderlich ist. Der Benutzer kann somit mit seinen Fingern z. B. die Kunststoff-Litze bzw. Kunststoffhülle einer Leitung ergreifen, wodurch bereits eine hinreichende kapazitive Kopplung sichergestellt ist.

Die Einheit kann insbesondere als mobile Einheit ausgebildet sein von einem Benutzer getragen werden, z. B. als Funktions-Armband.

Es sind jedoch weiterhin auch Ausbildungen möglich, bei denen die Einheit nicht am Körper des Benutzers angebracht wird, sondern die Erkennungs-Frequenzsignale vom Umfeld auf den Körper des Benutzers übertragen werden, insbesondere von einem leitfähigen Umfeld. So kann z. B. eine stationäre Einheit vorgesehen sein, von der die Erkennungs-Frequenzsignale auf den Körper des Benutzers übertragen werden, z. B. mit einem leitfähigen Untergrund, z. B. Fußboden, auf ein Kleidungsstück wie z. B. einen leitenden Schuh. Auch kann die stationäre Einheit an anderen Positionen im Umfeld vorgesehen sein und die Erkennungs-Frequenzsignale elektrisch auf den Benutzer übertragen, d.h. als Signalleitung zu dem Benutzer verlaufen. Weiterhin kann am Benutzer auch lediglich ein Umsetzer bzw. Wandler als mobile Einheit vorgesehen sein, wobei der Umsetzer z. B. drahtlose Signale einer stationären Einheit aufnimmt in die kapazitiven Signale umsetzt, so dass die Einheit durch die mobile Einheit (Umsetzer, Wandler) und die stationäre Einheit gebildet ist, d.h. teilweise mobil ist. Relevant ist, dass die Erkennungs-Frequenzsignale entnommen werden und direkt oder indirekt von dem Benutzer auf die Leitung des Kabels übertragen werden.

Der Erfindung liegt hierbei der Gedanke zugrunde, eine natürliche Benutzerführung zu ermöglichen, die die manuelle Handhabung eines Kabels durch den Benutzer, zur Verlegung auf einem Verlegetisch, möglichst einbezieht und keine oder wenige ergänzenden Schritte bzw. Bearbeitungsvorgänge durch den Benutzer erfordert. Hierbei wird erfindungsgemäß erkannt, dass bereits das Ergreifen einer Leitung eines Kabels durch den Benutzer eine elektrische Datenverbindung ermöglicht, und durch die Einheit somit eine Datenkommunikation ermöglicht wird, wenn das Kabel bereits an dem Verlegetisch angeschlossen ist.

Somit kann durch Einstecken des Kabels mit dem Stecker in die KabelHalterung und anschließendes Ergreifen einer Leitung durch den Benutzer bereits eine Datenkommunikation gestartet werden, aufgrund der eine Steuer- und Auswerteeinrichtung des Verlegetisches erkennt, welches Kabel in die hierfür geeignete Stecker-Halterung gesteckt wurde, und daraufhin Anzeigesignale ausgibt, die auf der Anzeigeeinrichtung des Verlegetisches als Verlegepfad angezeigt werden, z. B. auf einem zweidimensionalen Display, das die Aufnahmefläche des Verlegetisches bildet.

Nach Verlegen des Kabels, im Allgemeinen unter Fixierung des Kabels in geeigneten Kabelaufnahmen, Schellen usw. und Anbringung des zweiten Steckers, kann somit nachfolgend von dem Benutzer das nächste Kabel genommen, in die geeignete Stecker-Halterung gesteckt und eine Leitung mit seiner Hand ergriffen werden, so dass die Steuer- und Auswerteeinrichtung wiederum nun selbsttätig erkennt, dass nunmehr das nachfolgende, vom Benutzer gewählte Kabel zu verlegen ist.

Somit wird ein Herstellungsverfahren für Kabelstränge geschaffen, bei dem sukzessive nach der einseitigen Kontaktierung des Kabels über den Stecker mit dem Verlegetisch
- nachfolgend der Benutzer mit seiner Hand eine Leitung des Kabels ergreift,
- woraufhin das Kabel von der Auswerte- und Steuereinrichtung des Verlegesystems erkannt und der vorgesehene Verlegepfad auf einer Anzeigeeinrichtung angezeigt wird,
- woraufhin der Benutzer das Kabel und/oder die Leitungen des Kabels entlang des angezeigten Verlegepfades verlegt und fixiert, das zweite Ende eventuell geeignet kürzt (crimpt) und den zweiten Stecker montiert,
- nachfolgend gegebenenfalls weitere Leitungen desselben Kabels entlang des zugehörigen Verlegepfades verlegt werden,
- nach der Verlegung des Kabels bzw. seiner Leitungen das Verfahren durch Auswahl des nächsten Kabels zurückgesetzt wird.

Somit sind Fehlfunktionen bzw. Fehl-Verlegungen, bei denen für Kabel falsche Verlegepfade verwendet werden, d. h. Verwechslungen der Kabel durch den Benutzer usw., im Allgemeinen ausgeschlossen.

Es wird eine benutzerfreundliche Führung ermöglicht, die den natürlichen Bewegungsablauf des Benutzers beim Verlegen eines Kabels nicht unterbricht; der Benutzer steckt ein Kabel ein, ergreift eine Leitung und kann direkt den individuellen Verlegepfad sehen und das Kabel verlegen, und nachfolgend das nächste Kabel ergreifen.

Derartige Signal-Übertragungen über den menschlichen Körper durch Einkopplung von kapazitiven Frequenzsignalen sind als solche bekannt, insbesondere als Human Body Communication (HBC), und für die menschliche Gesundheit ungefährlich. Sie können z. B. im Frequenzbereich von einigen MHz erfolgen und weisen im Allgemeinen derartig geringe Stromstärken auf, dass keine Gefährdung vorliegt und auch der Benutzer keine Empfindung wahrnimmt. Grundsätzlich ist auch möglich, dass der Benutzer hierbei einen elektrisch leitenden Handschuh trägt.

Bei Einsatz einer mobilen Einheit wird diese am Körper des Benutzers angebracht; sie kann insbesondere ein Funktions-Armband sein. Somit kann der Benutzer die Leitung jeweils mit derjenigen Hand, an der seine mobile Einheit bzw. das Funktions-Armband angebracht ist, ergreifen, da somit ein kurzer Signalweg über seinen Körper vorliegt, nämlich z. B. lediglich über einen Teilbereich seiner Hand zu den Fingern.

Ein derartiges Funktions-Armband weist im Allgemeinen einen Energiespeicher, z. B. eine Batterie oder Akkumulator auf, das für eine längere Zeitdauer, insbesondere eine Schicht eines Montageprozesses, ausreichend ist, so dass keine Unterbrechungen erforderlich sind. Die mobile Einheit ist somit leicht und stört bei der Handhabung nicht.

Weiterhin sind vorzugsweise Betätigungseinrichtungen wie z. B. Schalter oder Tasten, die vorzugsweise programmierbar sind zur Einstellung vonFunktionen. Weiterhin kann eine Anzeigeeinrichtung vorgesehen sein, z.B. mit mehreren Signalleuchten zum Anzeigen eines Status bzw. mehrerer Statusangaben.

Gemäß einer besonders bevorzugten Ausbildung sind in der Einheit Benutzer-Daten bzw. eine Benutzer-ID gespeichert, die den Benutzer eindeutig identifiziert. Somit kann z. B. nachträglich ein Benutzer identifiziert werden, der einen Montageprozess vorgenommen hat. Insbesondere sind auch Multi-User-Verfahren möglich, bei denen somit mehrere Benutzer mit unterschiedlichen Benutzer-IDs gemeinsam einen Kabelstrang verlegen, wobei die von ihren Einheiten jeweils ausgesandten Erkennungs-Frequenzsignale eine eindeutige Zuordnung bzw. Identifizierung ermöglichen.

Hierbei kann die Identifizierung z. B. über unterschiedliche Frequenzen, oder auch in den übertragenen Daten der Frequenzsignale, erfolgen.

In z. B. einer internen oder externen Speichereinrichtung der Steuer- und Auswerteeinrichtung des Verlegetisches sind vorzugsweise die Verlegepfade für die einzelnen Kabel und z. B. Daten über die Benutzer-IDs gespeichert. Wenn somit die Steuer- und Auswerteeinrichtung über eine Stecker-Halterung des Verlegetisches Erkennungs-Frequenzsignale aufnimmt, kann sie sofort den Prozess starten, bei der sie das Kabel aufgrund der angesprochenen Stecker-Halterung identifiziert, die zugehörigen Anzeigesignale für das betreffende Kabel aus der Speichereinrichtung entnimmt und zur Anzeige des Verlegepfades an die Anzeigeeinrichtung ausgibt. Somit wird ein sicheres und benutzerfreundliches Verfahren zur individuellen Herstellung eines Kabelstranges ermöglicht.

Die Erfindung wird im Folgenden anhand der beiliegenden Zeichnungen an einigen Ausführungsformen näher erläutert. Es zeigen:
- Fig. 1: einen Verlegetisch mit einer Detektionseinrichtung gemäß einer Ausführungsform der Erfindung;
- Fig. 2: die mobile Einheit aus Fig. 1 in vergrößerter Darstellung;
- Fig. 3: ein Blockschaltbild der mobilen Einheit;
- Fig. 4: ein Flussdiagramm eines erfindungsgemäßen Verfahrens.

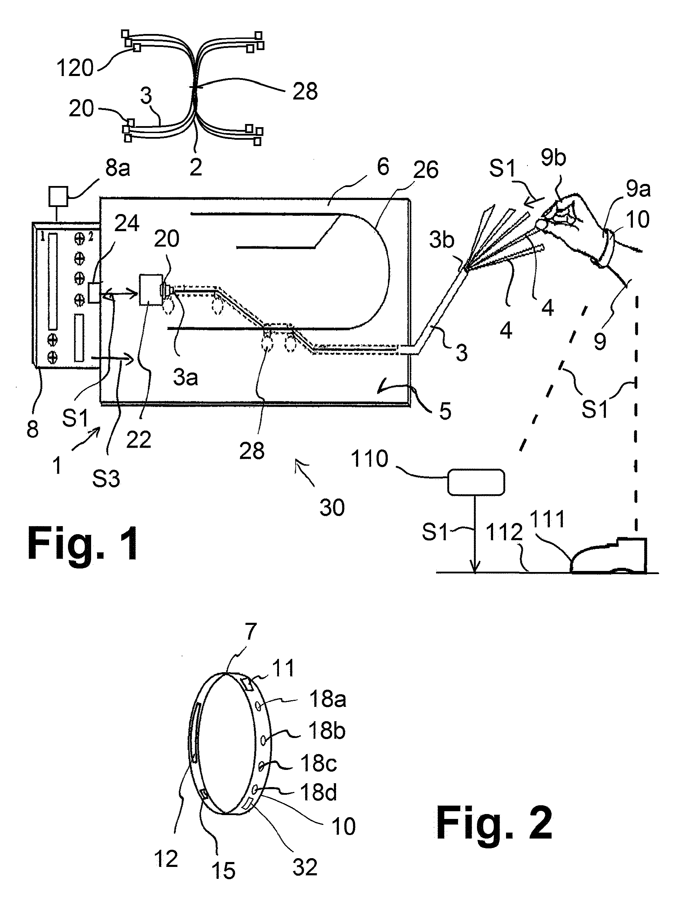

Ein Verlegesystem 30 zur Herstellung eines in Fig. 1 angedeuteten Kabelstranges 2 weist einen Verlegetisch 1, eine einen Teil des Verlegetisches 1 darstellende oder extern zu dem Verlegetisch 1 angeordnete Steuer- und Auswerteeinrichtung 8 und eine mobile Einheit 10 auf. Der Kabelstrang 2, z. B. ein Kabelbaum (cable harness) wird aus mehreren einzelnen Kabeln 3 zusammengesetzt, wobei jedes Kabel 3 ein oder mehrere elektrische Leitungen 4 aufweist, gegebenenfalls zusammen mit optischen Leitungen.

Der Verlegetisch 1 weist eine Verlegefläche 5 auf, in oder an der eine Anzeigeeinrichtung 6 vorgesehen ist. Hierbei kann die Verlegefläche 5 durch die Anzeigeeinrichtung 6 selbst ausgebildet werden. Die mobile Einheit 10 und die Steuer- und Auswerteeinrichtung 8 bilden zusammen eine Detektionseinrichtung, die zusammen mit dem Verlegetisch 1 somit das Verlegesystem 30 bildet.

Zur Ausbildung eines Kabelstrangs 2 streift ein Benutzer 9 sich gemäß einer erfindungsgemäßen Ausbildung eine tragbare mobile Einheit 10 über, die hier mit einem Armband 7 (Armschlaufe) als Befestigungseinrichtung ausgebildet ist und z. B. über das Handgelenk 9a des Benutzers gelegt wird, so dass sie in Kontakt mit der Haut des Benutzers ist. Der Benutzer nimmt ein Kabel 3 mit einem an einem ersten Ende 3a des Kabels 3 vorgesehenen Stecker 20 und steckt den Stecker 20 in eine Stecker-Halterung 22 (Steckmodul), die am Verlegetisch 5 vorgesehen und mit der Steuer- und Auswerteeinrichtung 8 verbunden ist, und ergreift eine Leitung 4 des Kabels 3.

Alternativ zu der mobilen Einheit 10 kann nach Fig. 1 auch eine stationäre Einheit 110 mit Übertragung der Erkennungs-Frequenzsignale S1 auf den Benutzer 9, und/oder z. B. ein leitfähiger Untergrund112, z. B. Fußboden, vorgesehen sein, über den die Erkennungs-Frequenzsignale S1 auf den Benutzer, z. B. Kleidung wie z. B. einen Schuh 111 des Benutzers 9, übertragen werden. Somit nimmt der Benutzer 9 die Erkennungs-Frequenzsignale S1 aus einem leitfähigen Umfeld auf und leitet sie weiter, oder sie werden drahtlos an einen Umsetzer am Körper des Benutzers zur Umsetzung in die kapazitiven Signale übertragen.

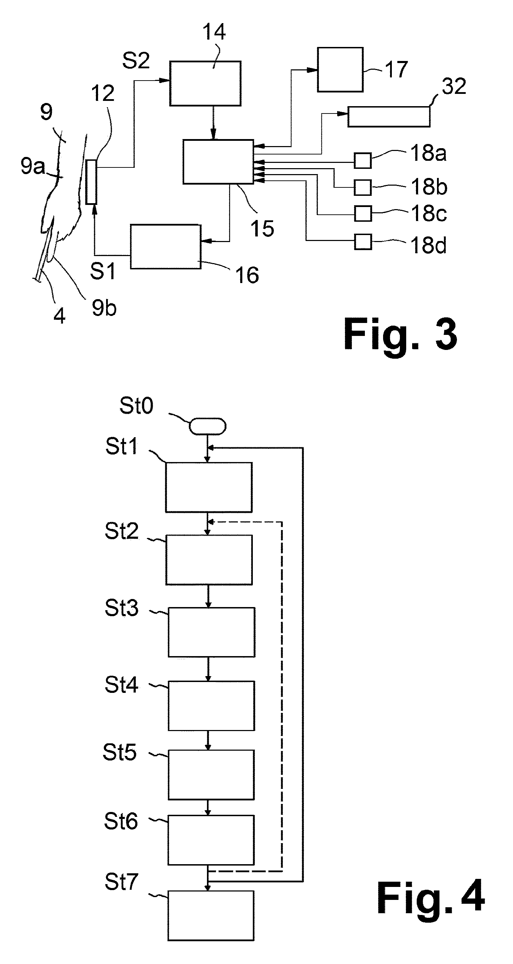

Die in Fig. 2 detaillierter und in Fig. 3 funktional dargestellte mobile Einheit 10 weist auf:
einen Energiespeicher 11, z. B. Batterie oder Akkumulator, für einen längeren Zeitraum,
einen kapazitiven Koppler 12, insbesondere als Metallfläche (capacitive coupling pad), der kapazitiv Erkennungs-Frequenzsignale S1 in den Körper des Benutzers 9 einkoppelt, wobei hier insbesondere eine bidirektionale Datenübertragung erfolgen kann,
weiterhin einen Signal-Demodulator 14, eine periphere Steuereinheit 15, einen Signal-Modulator 16, einen Speicher 17 - intern oder extern zu der peripheren Steuereinheit 15 -, um eine Benutzer-ID zu speichern,
sowie Bedieneinheiten 18a, 18b, 18c, 18d, die hier als Schalter, z. B. Bedien-Knöpfe oder Bedien-Flächen ausgelegt sind und zur Außenseite der mobilen Einheit ragen, so dass sie vom Benutzer direkt bedient werden können.

Vorzugsweise weist die mobile Einheit 10 weiterhin eine Anzeigeeinrichtung 32 auf, z.B. mit mehreren Signalleuchten zum Anzeigen eines Status bzw. mehrerer Statusangaben wie z. B. "nicht betriebsbereit, betriebsbereit, in (Sende-) Betrieb, Akku schwach".

Die Funktionalität der Bedieneinheiten 18a, 18b, 18c, 18d kann vorteilhafterweise frei programmierbar sein. Der kapazitive Koppler 12 gibt kapazitive Erkennungs-Frequenzsignale S1 über den Körper des Benutzers 9 ab. Wenn der Benutzer 9 gemäß Fig. 1 eine Leitung 4 des Kabels 3 mit seinen Fingern 9b anfasst - hier reicht eine Berührung z. B. der elektrischen Isolation/Litze an der Leitung 4 - wird wiederum eine kapazitive Datenübertragung von dem Fingern 9b auf die Leitung 4 ermöglicht, so dass die Signale S1 über die Leitung 4 durch das Kabel 3 übertragen werden können.

Die Stecker-Halterung 22 (Steckmodul) ist an eine Kommunikations-Schnittstelle 24 der Steuer- und Auswerteeinrichtung 8 angeschlossen, die somit die Erkennungs-Frequenzsignale S1 aufnimmt und demoduliert, und entsprechend auch zur Ausgabe zweiter kapazitiver Frequenzsignale S2 ausgebildet ist, die zurück über die Stecker-Halterung 22, den Stecker 20, die Leitung 4 und den Benutzer 9 zu der mobilen Einheit 10 übertragen werden.

Die Steuer- und Auswerteeinrichtung 8 ist weiterhin - z. B. über eine Datenschnittstelle - mit der Anzeigeeinrichtung 6 verbunden, um Anzeigesignale S3 auszugeben, die von der Anzeigeeinrichtung 6 zur zweidimensionalen optischen Anzeige eines Verlegepfades 26 verwendet werden.

Indem der Benutzer 9 mit den Fingern 9b der Hand, an der die mobile Einheit 10 als Armband aufgenommen ist, eine Leitung 4 des Kabels 3 berührt, wird eine Daten-Kommunikation gestartet, bei der die mobile Einheit 10 erste Frequenzssignale S1 an die Steuer- und Auswerteeinrichtung 8 ausgibt. Die Steuer- und Auswerteeinrichtung 8 erkennt somit das Kabel 3, und greift auf einen internen - oder externen - Speicher 8a mit aktuellen Daten über den auszubildenden Kabelstrang 2 zurück. Hieraus bildet die Steuer- und Auswerteeinrichtung 8 Anzeigesignale S3, die sie an die Anzeigeeinrichtung 6 ausgibt.

Die Anzeigeeinrichtung 6 ist hier z. B. als zweidimensionale Anzeigeeinheit, d. h. Anzeige-Matrix, z. B. als LED oder LCD-Panel, ausgebildet, die direkt den für das vorliegende Kabel 3 vorgesehenen Verlegepfad anzeigt. Der Benutzer erkennt somit den aktuellen Verlegepfad 26 und kann das aktuell von ihm gewählte Kabel 3 entsprechend dem Verlegepfad 26 auf dem Verlegetisch 1 verlegen, wobei das Kabel 3 vorteilhafterweise jeweils in vorgesehene Aufnahmen 28, wie z. B. Schellen usw., fest aufgenommen wird, so dass ein Kabelstrang 2 oder Kabelbaum mit fest miteinander verbundenen einzelnen Kabeln 3 ausgebildet wird, die in vorbestimmten Verlegepfaden 26 verlegt sind.

Anschließend kann der Benutzer das zweite Ende 3b des Kabels 3 mit den noch offenen oder einzelnen Leitungen 4 z. B. mit einem zweiten Stecker 120 versehen, und den zweiten Stecker 120 wiederum in eine geeignete Stecker-Halterung stecken, die ihm durch den Verlegepfad 26 angezeigt wird.

Nachfolgend wählt der Benutzer 9 das nächste Kabel 3 aus, steckt dessen Stecker 20 in die hierfür geeignete Stecker-Halterung 22 und berührt mit seinen Fingern 9b eine Leitung 4, so dass nachfolgend wiederum von der Steuer- und Auswerteeinrichtung 8 der hierfür geeignete Verlegepfad 26 dargestellt wird.

Somit wird der Kabelstrang 2 bzw. Kabelbaum aus den einzelnen Kabeln 3 sukzessive ausgebildet.

Die in dem Speicher 17 der mobilen Einheit 10 gespeicherte Benutzer-ID ermöglicht eine eindeutige Zuordnung der mobilen Einheit zu dem Benutzer. Vorteilhafterweise ist ein Multi-User-Betrieb bzw. eine Mehr-Personen-Bedienung möglich, bei der somit mehrere Benutzer 9 den Kabelstrang 2 ausbilden, wobei die mobilen Einheiten 10 hierbei vorteilhafterweise unterschiedliche Erkennungs-Frequenzsignale S1 ausgeben, wobei die Differenzierung durch unterschiedliche Frequenzen, z. B. im Frequenzband von 2 bis 10 MHz, erfolgen kann, somit stören sich die Frequenzsignale S1 nicht.

Ergänzend können dem Benutzer über die Anzeigeeinrichtung 6 ergänzende Informationen zu dem Kabel 3 angezeigt werden, z. B. die Anzahl der vorgesehenen Leitungen 4.

Somit erfolgt die sukzessive Ausbildung eines Kabelstrangs 2 durch natürliche Bewegungen, bei denen ein Benutzer mit den Fingern 9b der relevanten Hand, an der mobilen Einheit 10 vorgesehen ist, Leitungen 4 eines Kabels 3 ergreift, und sofort optisch den Verlegepfad 26, ggf. auch weitere Informationen, angezeigt bekommt.

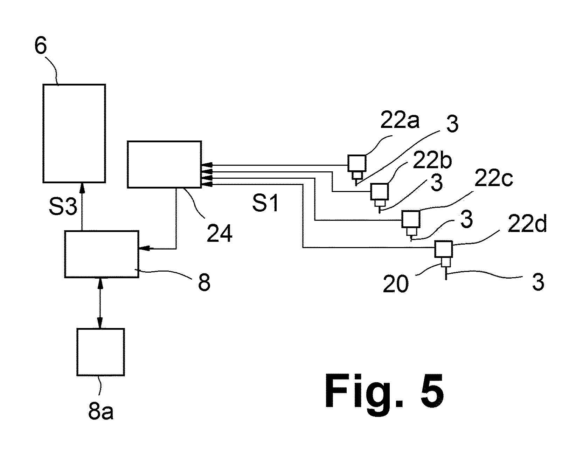

Fig. 5 zeigt eine Ausführungsform der Signaldemodulation und Signalverarbeitung durch die Steuer- und Auswerteeinrichtung 8:
mehrere Stecker-Halterungen 22, die hier als 22a, 22b, 22c, 22d bezeichnet sind, nehmen jeweils ein Kabel 3 mit Stecker 22 auf, die wie oben beschrieben Erkennungs-Frequenzsignale S1 der mobilen Einheit aufnehmen. Die Stecker- Halterungen 22a bis 22d sind an die Kommunikations-Schnittstelle 24 angeschlossen, die hier als Demodulator und Multiplexer ausgebildet ist und z. B. die Stecker-Halterungen 22 abscannt,die Erkennungs-Frequenzsignale S1 demoduliert und gemultiplext an die Steuer- und Auswerteeinrichtung 8 weitergibt, die dann wie beschrieben auf Daten aus der internen oder externen Speichereinrichtung 8a zurückgreift und die Anzeigesignale S3 ausgibt. Die Stecker-Halterungen 22 und die Anzeigeeinrichtung 6 sind Teil des Verlegetisches 1; die Steuer- und Auswerteeinrichtung 8 mitsamt der Kommunikations-Schnittstelle 24 können extern oder als Teil des Verlegetisches 1 ausgebildet sein.

Das erfindungsgemäße Verfahren zum Herstellen eines Kabelstrangs 2 oder Kabelbaums sieht somit gemäß Figur 4 die folgenden Schritte vor:
Nach dem Start in Schritt St0 des Einrichtens, gemäß dem Vorbereitungen getroffen sind und ein Benutzer 9 somit seine mobile Einheit 10 umgibt und das Verlegesystem 30 bereitgestellt wird,
nimmt der Benutzer 9 nachfolgend in Schritt St1 des Kabel-Einsteckens ein erstes Kabel 3, steckt den Stecker 20 des ersten Endes 3a in die geeignete Stecker-Halterung 22 am Verlegetisch 1, so dass eine Datenverbindung mit der Steuer- und Auswerteeinrichtung 8 hergestellt ist,
gemäß Schritt St2 des Kabel-Erfassens ergreift der Benutzer 9 dann mit seinem Körper, insbesondere seinen Fingern 9b, eine Leitung 4 des Kabels 3, z. B. an deren Kunststoff-Hülle bzw. Litze, so dass die kapazitive Kopplung seiner mobilen Einheit 10 mit der Leitung 4 und eine Datenverbindung mit der Steuer- und Auswerteeinrichtung 8 hergestellt wird,
   nachfolgend wird in Schritt St3 (Start Datenkommunikation) durch die Datenverbindung ein Datenaustausch bzw. Signalaustausch zwischen der mobilen Einheit 10 und der Steuer- und Auswerteeinrichtung 8 gestartet,
in Schritt St4 des Identifizierens ermittelt die Steuer- und Auswerteeinrichtung 8, welche Benutzer-ID in der mobilen Einheit 10 gespeichert ist, und welches Kabel 3 von dem Benutzer 9 ergriffen wurde,
gemäß Schritt St5 der Anzeige des Verlegepfades gibt die Steuer- und Auswerteeinrichtung 8 nachfolgend Anzeigesignale S3 an die Anzeigeeinrichtung 6 zur Anzeige des Verlegepfades 26 auf der Anzeigeeinrichtung 6,
in Schritt St6 des Einsetzens der Leitung am Ende erfolgt der Anschluss eines zweiten Steckers 120 am zweiten Ende 3b des Kabels 3 und Einsetzen des zweiten Steckers 120,
wobei bei einer Verlegung der einzelnen Leitungen 4 in einer ersten, inneren Schleife erst alle Leitungen 4 des Steckers 3 verlegt werden und somit das Verfahren vor den Schritt St2 zurückgesetzt wird, und
nach Fertigstellung des Steckers 3 das Verfahren gemäß der äußeren Schleife wiederum vor den Schritt St1 zurückgesetzt wird, indem der Benutzer 9 ein neues Kabel 3 einsteckt und eine Leitung 4 ergreift, bis der Kabelstrang 2 in Schritt St7 fertiggestellt ist.

### Bezugszeichenliste (Teil der Beschreibung)

- 1: Verlegetisch
- 2: Kabelstrang, z. B. Kabelbaum
- 3: Kabel
- 3a: erstes Ende des Kabels 3
- 3b: zweites Ende des Kabels 3
- 4: Leitung des Kabels 3
- 5: Verlegefläche
- 6: Anzeigeeinrichtung
- 7: Befestigungseinrichtung, z. B. Armband oder Armring
- 8: Steuer- und Auswerteeinrichtung
- 8a: interne oder externe Speichereinrichtung der Steuer- und Auswerteeinrichtung 8
- 9: Benutzer
- 9a: Handgelenk
- 9b: Finger
- 10: mobile, tragbare Einheit, z. B. Funktions-Armband
- 11: Energiespeicher, z. B. Batterie oder Akku
- 12: kapazitiver Koppler der mobilen Einheit 10
- 14: Demodulator der mobilen Einheit 10
- 15: periphere Steuereinheit der mobilen Einheit 10
- 16: Modulator
- 17: Speicher in der mobilen Einheit 10
- 18a, b, c, d: Bedieneinheiten, z. B. aktivierbare Funktionsflächen
- 20: Stecker
- 22, 22a - d: Stecker-Halterung
- 24: Kommunikations-Schnittstelle der Steuer- und Auswerteeinrichtung 8, z. B. als Demodulator und Multiplexer,
- 26: Verlegepfad, angezeigt auf der Anzeigeeinrichtung 6
- 30: Verlegesystem
- 32: Anzeigeeinrichtung an der mobilen Einheit 10
- 110: stationäre Einheit zur Ausgabe der Erkennungs-Frequenzsignale (S1) an den Benutzer,
- 111: Kleidung, z. B. Schuh, des Benutzers zur Aufnahme und Weiterleitung der Erkennungs-Frequenzsignale (S1),
- 112: leitendes Umfeld, z. B. Untergrund (Fußboden) zur Weiterleitung der Erkennungs-Frequenzsignale (S1) an den Benutzer,
- 120: zweiter Stecker
- S1: Erkennungs-Frequenzsignal der Einheit 10, 110
- S2: Signale der Steuer- und Auswerteeinrichtung 8 zu der Einheit 10, 110
- S3: Anzeigesignale von der Steuer- und Auswerteeinrichtung 8 an die Anzeigeeinrichtung 6,
- St0 bis St7: Schritte des Verfahrens zur Herstellung

## Patentansprüche

1. Detektionseinrichtung (8; 10, 110) für ein Verlegesystem (30) zur Ausbildung eines Kabelstrangs (2), wobei die Detektionseinrichtung aufweist:
eine Einheit (10, 110) mit einem kapazitiven Koppler (12) zur Einkopplung von Erkennungs-Frequenzsignalen (S1) in den Körper des Benutzers (9), eine Steuer- und Auswerteeinrichtung (8) zur Ausgabe von Anzeigesignalen (S3) an eine Anzeigeeinrichtung (6),
wobei die Steuer- und Auswerteeinrichtung (8) zur Datenkommunikation mit der Einheit (10, 110) über Stecker-Halterungen (22) und an die Stecker-Halterungen (22) angeschlossenes Kabel (3) ausgebildet ist,
wobei die Steuer- und Auswerteeinrichtung (8) ausgelegt ist,
bei Aufnahme eines Erkennungs-Frequenzsignals (S1) der Einheit (10, 110) über eine Stecker-Halterung (22) nachfolgend Anzeigesignale (S3) an die Anzeigeeinrichtung (6) zur Anzeige eines Verlegepfades (26) für das angeschlossene Kabel (3) und/oder einzelne Leitungen (4) des Kabels (3) auszugeben.

2. Detektionseinrichtung (8, 10) nach Anspruch 1, **dadurch gekennzeichnet, dass** die Einheit als mobile Einheit (10) mit einer Befestigungseinrichtung (7) zur Anbringung an dem Benutzer (9) ausgebildet ist, vorzugsweise mit einem Energiespeicher (11), z. B. Batterie oder Akkumulator.

3. Detektionseinrichtung nach Anspruch 2, **dadurch gekennzeichnet, dass** die mobile Einheit (10) als Funktions-Armband zur Anbringung an einer Hand, einem Handgelenk oder einem Arm eines Benutzers (9) ausgebildet ist.

4. Detektionseinrichtung (8, 110) nach Anspruch 1, **dadurch gekennzeichnet, dass die** Einheit als stationäre Einheit (110) zur Übertragung des Erkennungs- Frequenzsignals (S1) auf den Benutzer (9) ausgebildet ist, insbesondere mit leitfähigem Umfeld, z. B. leitfähigem Untergrund (112) zur Übertragung auf den Benutzer (9).

5. Detektionseinrichtung (8, 10) nach einem der vorherigen Ansprüche , **dadurch gekennzeichnet, dass** die Steuer- und Auswerteeinrichtung (8) eine Speichereinrichtung (8a) aufweist, in der Daten über die Stecker (3), die zugehörigen Verlegepfade (26) und die Anzeige-Signale (S3) und Daten über Benutzer-IDs der Einheiten (10, 110) und Erkennungs-Frequenzsignale (S1) mehrerer Einheiten (10, 110) gespeichert sind.

6. Detektionseinrichtung nach einem der vorherigen Ansprüche, **dadurch gekennzeichnet, dass** die Steuer- und Auswerteeinrichtung (8) bei Aufnahme eines Erkennungs-Frequenzsignals (S1) selbsttätig die Anzeigesignale (S3) ausgibt.

7. Detektionseinrichtung nach einem der vorherigen Ansprüche, **dadurch gekennzeichnet, dass** die die Steuer- und Auswerteeinrichtung (8) ausgelegt ist, die mehreren Stecker-Halterungen (22) abzuscannen und eine Einrichtung zum Multiplexen (24), insbesondere als Teil einer Datenschnittstelle (24) aufweist zum Multiplexen der Erkennungs- Frequenzsignale (S1) oder demodulierter Erkennungs-Frequenzsignale (S1).

8. Detektionseinrichtung nach einem der vorherigen Ansprüche, **dadurch gekennzeichnet, dass** die Einheit (10, 110) aufweist:
einen Modulator (16) zur Erzeugung der Erkennungs-Frequenzsignale (S1) und Ausgabe an den kapazitiven Koppler (12), und
eine periphere Steuereinheit (15) zur Ansteuerung des Modulators (16).

9. Detektionseinrichtung (8; 10, 110) nach Anspruch 8, **dadurch gekennzeichnet, dass** die Einheit (10, 110) weiterhin aufweist:
einen Speicher (17), z. B. internen Speicher (17), zum Speichern einer Benutzer-ID,
mindestens eine vorzugsweise programmierbare Betätigungseinrichtung (18a, b, c, d), z. B. Betätigungsflächen, zur Betätigung durch den Benutzer und Aktivierung von Funktionen.

10. Detektionseinrichtung (8; 10, 110) nach Anspruch 8 oder 9, **dadurch gekennzeichnet, dass** die Einheit (10, 110) weiterhin eine Anzeigeeinrichtung (32) zur Anzeige mindestens eines Betriebsstatus aufweist, z. B. eines Betriebstatus zur Angabe eines Betriebes und/oder eines Betriebstatus zur Angabe einer Betriebsbereitschaft, und/oder zur Angabe eines Sende-Status, und/oder zur Angabe einer Energiespeicher-Status.

11. Detektionseinrichtung (8, 10, 110) nach einem der Ansprüche 8 bis 10, **dadurch gekennzeichnet, dass** die Einheit (10, 110) weiterhin einen Demodulator (14) zur Demodulation aufgenommener zweiter Frequenzsignale (S2) der Steuer- und Auswerteeinrichtung (8) aufweist, für eine bidirektionale Datenkommunikation zwischen der Steuer- und Auswerteeinrichtung (8) und der peripheren Steuereinheit (15) über den Körper des Benutzers (9) und eine Leitung (4) eines Kabels (3).

12. Verlegesystem (30) zur Herstellung von Kabelsträngen (2), das aufweist:
eine Detektionseinrichtung nach einem der vorherigen Ansprüche, mehrere Stecker-Halterungen (22) zur Aufnahme jeweils eines Steckers (20) eines Kabels (3),
eine Anzeigeeinrichtung (6) zur Aufnahme der Anzeigesignale (S3) und zweidimensionalen Anzeige der Verlegepfade (26),
wobei die Anzeigeeinrichtung (6) ein zweidimensionales Display aufweist, das eine Verlegefläche (5) zum Auflegen der Kabel (3) und/oder der Leitungen (4) des Kabel (3) entlang des zweidimensionalen Verlegepfades (26) bildet, und
wobei die Stecker-Halterungen (22) und die Anzeigeeinrichtung (6) über die Steuer- und Auswerteeinrichtung (8) miteinander verbunden sind.

13. Verfahren zum Herstellen eines Kabelstrangs (2), mit mindestens folgenden Schritten:
Bereitstellen eines Verlegetisches (1) mit einer Anzeigeeinrichtung (6) zur Anzeige von Verlegepfaden (26), einer Steuer- und Auswerteeinrichtung (8), an die Steuer- und Auswerteeinrichtung (8) angeschlossene Stecker-Halterungen (22) und einer Einheit zum Aussenden von Erkennungs-Frequenzsignalen (S1) (St0),
Einstecken eines Kabels (3) mit seinem an seinem ersten Ende (3a) angeschlossenen Stecker (20) in eine Stecker-Halterung (22) des Verlegetisches (1) (St1),
Ausbilden einer Kommunikationsverbindung zwischen der Einheit (10, 110) und der Steuer- und Auswerteeinrichtung (8) über eine kapazitive Kopplung über den Benutzer (9) und eine vom Benutzer ergriffene Leitung (4) des Kabels (3), den Stecker (20) und die Stecker-Halterung (22), unter Ausgabe von Erkennungs-Frequenzsignalen (S1) von der Einheit (10, 110) an die Steuer- und Auswerteeinrichtung (8) (St2),
Starten der Datenübertragung zwischen der Einheit (10, 110) und der Steuer- und Auswerteeinrichtung (8) (St3),
Detektion des angeschlossenen Kabels (3) und/oder einzelner Leitungen (4) des Kabels (3) durch die Steuer- und Auswerteeinrichtung (8), wobei gespeicherte Daten zu den Kabeln (3) ausgelesen werden, (St4),
Ausgeben von Anzeigesignalen (S3) von der Steuer- und Auswerteeinrichtung (8) an die Anzeigeeinrichtung (6) und Anzeige eines Verlegepfades (26) für das Kabel (3) und/oder einzelne Leitungen (4) des Kabels (3) auf der Anzeigeeinrichtung (6) (St5),
Fertigstellen des Kabels (3) (St6),
bei Ausbilden einer neuen Kommunikationsverbindung zwischen der Einheit (10, 110) und einem weiteren Kabel (3) Wiederholung der Schritte ab Einstecken eines Kabels (3), bis der Kabelstrang (2) ausgebildet ist.

14. Verfahren nach Anspruch 13, **dadurch gekennzeichnet, dass** bei Verlegung einzelner Leitungen (4) des Kabels (3) sukzessive für die einzelnen Leitungen (4) des Kabels (3) die Schritte ab Ausbilden einer Kommunikationsverbindung (St2) wiederholt werden.

15. Verfahren nach Anspruch 13 oder 14, **dadurch gekennzeichnet, dass** bei Aufnahme mehrerer erster Frequenzsignale (S1) mehrerer Einheiten (10, 110) und zugeordneter Ausgabe von Anzeigesignalen (S3) ein Multi-User-Betrieb ausführbar ist oder ausgeführt wird.
